(19) Europäisches Patentamt European Patent Office Office européen des brevets

(11) **EP 3 685 676 B1**

(12) **EUROPEAN PATENT SPECIFICATION**

(45) Date of publication and mention of the grant of the patent:
**10.11.2021 Bulletin 2021/45**

(21) Application number: **19872253.0**

(22) Date of filing: **31.01.2019**

(51) Int Cl.:
*A23K 50/80* (2016.01)    *A23K 20/174* (2016.01)
*A23K 20/189* (2016.01)    *A23K 10/22* (2016.01)
*A23K 20/142* (2016.01)    *A23K 10/18* (2016.01)
*A23K 10/20* (2016.01)    *A23K 20/20* (2016.01)
*A23K 20/158* (2016.01)    *A23K 40/10* (2016.01)

(86) International application number:
**PCT/CN2019/074265**

(87) International publication number:
**WO 2020/098165 (22.05.2020 Gazette 2020/21)**

(54) **ZERO-STARCH AND BINDER-FREE STARTER COMPOUND FEED FOR FISH, AND PREPARATION METHOD THEREOF**

STÄRKE- UND BINDEMITTELLOSE STARTFUTTERVERBINDUNG FÜR FISCHROGEN UND VERFAHREN ZU IHRER HERSTELLUNG

ALIMENT COMPOSÉ DE DÉPART POUR ALEVINS DE POISSON EXEMPT DE LIANT ET D'AMIDON, ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.07.2020 Bulletin 2020/31**

(73) Proprietor: **Guangdong Yuequn Biotechnology Co., Ltd.**
**Guangdong 515500 (CN)**

(72) Inventors:
• **Hong, Yucong**
  **Jieyang City, Guangdong 515500 (CN)**
• **Sun, Kaihui**
  **Jieyang City, Guangdong 515500 (CN)**
• **Hong, Yujian**
  **Jieyang City, Guangdong 515500 (CN)**
• **Hong, Yuequn**
  **Jieyang City, Guangdong 515500 (CN)**
• **Zhao, Shuyan**
  **Jieyang City, Guangdong 515500 (CN)**
• **Wang, Xiaoshan**
  **Jieyang City, Guangdong 515500 (CN)**
• **Cai, Xiaomin**
  **Jieyang City, Guangdong 515500 (CN)**

(74) Representative: **Hanna Moore + Curley**
**Garryard House**
**25-26 Earlsfort Terrace**
**Dublin 2, D02 PX51 (IE)**

(56) References cited:
CN-A- 106 376 778    CN-A- 107 373 092
CN-A- 107 518 210    CN-A- 107 691 877
CN-A- 107 950 760    CN-A- 108 125 069

**Description**

**TECHNICAL FIELD**

The present invention relates to the field of starter feeds, and particularly relates to a zero-starch and binder-free starter compound feed for fish and the preparation method thereof.

**BACKGROUND**

Starter feeds are rations for the first feeding stage of young animals. At present in the aquaculture industry, starter feeds for fish generally include egg yolk, soybean milk and microalgae. Due to poor water resistance in water, these feeds will quickly break up after thrown into water such that most of the feeds cannot be eaten by the fish, resulting in low utilization of the feeds and large nutrition loss, affecting the growth rate of fish due to insufficient nutrition from the feeds, and thereby failing to achieve the goal of rapid growth and high yield. Also, since components of the feeds are mainly organic substances, the uneaten feeds are likely to pollute the water and deteriorate the aquaculture environment.

For traditional artificial compound feeds, starch is essential as an additive and binder, and will be used in combination with coating materials to ensure the formation and hardening of pellet feeds. However, aquatic animals are "congenital diabetics" due to poor starch digestion and utilization that they cannot fully utilize starch, resulting in waste.

The known art is represented by the following Chinese patent publications: CN 108 125 069 A; CN 107 373 092 A; CN 107 518 210 A and CN 106 376 778 A.

**SUMMARY**

One object of the present invention is to provide a zero-starch (flour) and binder-free starter compound feed for fish, which has high water stability, selective diffusivity, suitable suspensibility, high palatability and high attracting performance, and improves feed intake.

The zero-starch and binder-free starter compound feed for fish of the present invention is produced by the following method:

providing ingredients, the ingredients comprising by mass, 15-50% of fishmeal, 10-20% of copepod, 1-5% of casein, 3-10% of brine shrimp, 2-5% of beer yeast powder, 5-8% of dried earthworm, 1-4% of betaine, 2-5% of squid paste, 4-10% of fairy shrimp, 5-10% of squid, 1-3% of phospholipid, 3-10% of oyster, 1-2.5% of fish oil, 1-2% of vitamin mixture, 2-10% of exogenous multienzyme complex, 1-3% of mineral element mixture, 1-3% of biological preparation, 1-5% of EPA, and 1-6% of DHA;

pulverizing the ingredients, mixing evenly, adding water and stirring to give a mash; vacuum freeze drying the mash at -50°C to -100°C, and then homogenizing, expanding, spray drying, oven drying, sifting, and cooling to give the starter compound feed for fish;

wherein the step of pulverizing the ingredients is performed by pulverizing to a size of 350 to 550 mesh using an ultrafine pulverizer and/or a colloid mill; and wherein

the step of adding water and stirring to give the mash is performed by adding water and stirring for 20-45 minutes to give a mash containing by mass 25-35% of the ingredients.

The above-mentioned copepod, brine shrimp, fairy shrimp, squid and oyster are alive when provided.

Preferably, the ingredients comprises by mass, 40% of fishmeal, 10% of copepod, 3% of casein, 6% of brine shrimp, 3% of beer yeast powder, 4% of dried earthworm, 2% of betaine, 6% of fairy shrimp, 5% of squid, 2% of phospholipid, 4% of oyster, 1.5% of fish oil, 1.5% of vitamin mixture, 3% of exogenous multienzyme complex, 1% of mineral element mixture, 2% of biological preparation, 3% of EPA, and 3% of DHA

The step of vacuum freeze drying at -50°C to -100°C is performed by vacuum drying at -80°C.

The step of expanding is performed by a micro-expansion with an expansion ratio of 16%.

The step of spray drying is performed with an inlet temperature of 175°C and an outlet temperature of 85°C.

The step of oven drying is performed with a drying temperature of 75°C to 125°C.

The vitamin mixture comprises per kilogram: 30 g of vitamin A, 2 g of vitamin D3, 60 g of vitamin E, 4.5 g of vitamin K3, 30 g of vitamin B 1, 2 g of vitamin B2, 60 g of vitamin B6, 4.5 g of vitamin B12, 20 g of nicotinic acid, 20 g of calcium pantothenate, 0.15 g of biotin, 150 g of inositol, 4 g of folic acid, 275 g of vitamin C, and 337.85 g of corncob meal.

The vitamin mixture is prepared by weighing out the vitamins according to the above formula, mixing with the corncob meal, and stirring evenly.

The exogenous multienzyme complex is an enzyme complex comprising two or more of protease, lipase and phytase.

The mineral element mixture comprises per kilogram: 20 g of copper sulfate, 100 g of ferrous sulfate, 35 g of zinc sulfate, 11 g of manganese sulfate, 0.55 g of cobalt chloride, 0.55 g of sodium selenite, 20 g of potassium dihydrogen phosphate, 20 g of sodium dihydrogen phosphate, and 792.9 g of zeolite powder.

The mineral element mixture is prepared by: oven drying the above mineral salts at 100°C for 2 hours to remove moisture in the mineral salts, pulverizing and passing through a 100-mesh standard sieve; weighing out the mineral salts that pass through the sieve according to the above formula, mixing with feed-grade zeolite powder, and stirring evenly.

The biological preparation is *Bacillus,* including *Bacillus subtilis, Bacillus licheniformis*, and the like.

Compared with the prior art, the present invention has the following benefits:

It has been realized by the present invention that, without the addition of starch or other binders, by optimizing the selection and processing of ingredients (pulverizing the ingredients to subcellular structure with a particle size of micron level, so that the starter compound feed has a particle size as low as 0.1 mm and thereby exhibit higher suspensibility; vacuum freeze drying, effectively controlling of dispersion of powders in solution, and use of micro-expansion that gives the compound feed desired physical properties), not only the product can be formed as microcapsule particles, but also the various nutrients will not be destroyed during processing and are balanced in the microcapsule particles. Furthermore, trophic structure, dissolution rate, suspensibility and other physical characteristics of the feeds have been comprehensively taken into consideration that, the feed exhibit the characteristics of bioactive feed in all aspects, has rich and balanced nutrients, higher attractivity and high digestibility, promoting growth and improving survival rate.

## DETAILED DESCRIPTION OF THE EMBODIMENTS

The following examples are intended to further illustrate the present invention, but not to limit the present invention.

In the following examples, the vitamin mixture comprised per kilogram 30 g of vitamin A, 2 g of vitamin D3, 60 g of vitamin E, 4.5 g of vitamin K3, 30 g of vitamin B1, 2 g of vitamin B2, 60 g of vitamin B6, 4.5 g of vitamin B12, 20 g of nicotinic acid, 20 g of calcium pantothenate, 0.15 g of biotin, 150 g of inositol, 4 g of folic acid, 275 g of vitamin C, and 337.85 g of corncob meal. The vitamin mixture was prepared by weighing out the vitamins according to the above formula, mixing with the corncob meal, and stirring evenly.

In the following examples, the mineral element mixture comprised per kilogram: 20 g of copper sulfate, 100 g of ferrous sulfate, 35 g of zinc sulfate, 11 g of manganese sulfate, 0.55 g of cobalt chloride, 0.55 g of sodium selenite, 20 g of potassium dihydrogen phosphate, 20 g of sodium dihydrogen phosphate, and 792.9 g of zeolite powder. The mineral element mixture was prepared by: oven drying the above mineral salts at 100°C for 2 hours to remove moisture in the mineral salts, pulverizing and passing through a 100-mesh standard sieve; weighing out the mineral salts that pass through the sieve according to the above formula, mixing with feed-grade zeolite powder, and stirring evenly.

In the following examples, the exogenous multienzyme complex is composed of pepsin, lipase and phytase according to a mass ratio of 1:1:0.1.

In the following examples, the biological preparation was a *Bacillus subtilis* preparation, which was commercially available in ≥ 20 billion cfu/g.

In the following examples, the copepod, brine shrimp, fairy shrimp, squid and oyster were alive when provided.

Example 1:

Ingredients: The zero-starch and binder-free starter compound feed for fish comprised by mass, 26% of fishmeal, 14% of copepod, 3% of casein, 6% of brine shrimp, 3% of beer yeast powder, 5% of dried earthworm, 2% of betaine, 3% of squid paste, 6% of fairy shrimp, 6% of squid, 2% of phospholipid, 6% of oyster, 1.5% of fish oil, 1.5% of vitamin mixture, 5% of exogenous multienzyme complex, 2% of mineral element mixture, 2% of biological preparation, 3% of EPA (eicosapentaenoic acid), and 3% of DHA (docosahexaenoic acid).

Preparation: All the ingredients were pulverized (pulverized via an ultrafine pulverizer or homogenized via a colloid mill; for example, the fishmeal, casein, beer yeast powder, betaine, phospholipid, vitamin mixture, exogenous multienzyme complex, mineral element mixture, biological preparation, EPA, and DHA were pulverized via an ultrafine pulverizer, while the copepod, brine shrimp, dried earthworm, squid paste, fairy shrimp, squid, oyster, and fish oil were homogenized via a colloid mill) to a size of 400 mesh, mixed completely and evenly, added with water according to a mass ratio of 30:70 (ingredients to water) and stirred for 25 minutes to give a mash, which was then subjected to vacuum freeze drying at -80°C (e.g. using liquid nitrogen), homogenized, expanded (with an expansion ratio of 16%; the expansion ratio is calculated by: (expanded pellet volume - unexpanded pellet volume) / unexpanded pellet volume), spray dried (with an inlet temperature of 175°C and an outlet temperature of 85°C), oven dried (at a temperature of 75°C to 125°C), sifted, and cooled to give the starter compound feed for fish.

Comparative example 1:

Ingredients: The zero-starch starter compound feed for fish comprised by mass, 30% of fishmeal, 6% of shrimp shell meal, 6% of beer yeast powder, 20% of sandworm, 10% of squid meal, 8% of spirulina, 3% of soybean oil, 2% of phospholipid, 2% of betaine, 1% of vitamin mixture, 3% of mineral element mixture, 2% of casein, 3% of exogenous multienzyme complex, 3% of microbiological preparation, 0.5% of *Gastrodia elata,* and 0.5% of *Dictyophora indusiata.*

Preparation: The fishmeal, shrimp shell meal, beer yeast powder, sandworm, squid, spirulina, and casein were pulverized to 400-mesh fine powder; the fine powder was then completely mixed with the soybean oil, phospholipid, betaine, vitamin mixture, mineral element mixture, exogenous multienzyme complex, microbiological preparation, *Gastrodia elata,* and *Dictyophora indusiata.* Water was added and stirred for 15 minutes to give a mash containing 30% by mass the ingredients, which was then homogenized under 10 MPa; the homogenized product was then spray dried (with an inlet temperature of 230°C and an outlet temperature of 110°C), oven dried at 100°C, sifted, and cooled to give the starter compound feed for fish.

Comparative example 2:

Ingredients: The zero-starch and binder-free starter compound feed for fish comprised by mass, 26% of fishmeal, 43% of copepod, 3% of casein, 3% of beer yeast powder, 2% of betaine, 3% of squid paste, 2% of phospholipid, 1.5% of fish oil, 1.5% of vitamin mixture, 5% of exogenous multienzyme complex, 2% of mineral element mixture, 2% of biological preparation, 3% of EPA, and 3% of DHA.

Preparation: All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 25 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for fish.

Comparative example 3:

Ingredients: The zero-starch and binder-free starter compound feed for fish comprised by mass, 26% of fishmeal, 3% of casein, 43% of brine shrimp, 3% of beer yeast powder, 2% of betaine, 3% of squid paste, 2% of phospholipid, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 4:

Ingredients: The zero-starch and binder-free starter compound feed for fish comprised by mass, 26% of fishmeal, 3% of casein, 3% of beer yeast powder, 43% of dried earthworm, 2% of betaine, 3% of squid paste, 2% of phospholipid, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 5:

Ingredients: The zero-starch and binder-free starter compound feed for fish comprised by mass, 26% of fishmeal, 3% of casein, 3% of beer yeast powder, 2% of betaine, 3% of squid paste, 43% of fairy shrimp, 2% of phospholipid, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 6:

Ingredients: The zero-starch and binder-free starter compound feed for fish comprised by mass, 26% of fishmeal, 3% of casein, 3% of beer yeast powder, 2% of betaine, 3% of squid paste, 43% of squid, 2% of phospholipid, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 7:

Ingredients: The zero-starch and binder-free starter compound feed for fish comprised by mass, 26% of fishmeal, 3% of casein, 3% of beer yeast powder, 2% of betaine, 3% of squid paste, 2% of phospholipid, 43% of oyster, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 8:

Ingredients: The zero-starch and binder-free starter compound feed for fish comprised by mass, 26% of fishmeal, 28% of copepod, 3% of casein, 3% of beer yeast powder, 2% of betaine, 3% of squid paste, 15% of squid, 2% of phospholipid, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 9:

Ingredients: The zero-starch and binder-free starter compound feed for fish comprised by mass, 26% of fishmeal, 3% of casein, 20% of brine shrimp, 3% of beer yeast powder, 2% of betaine, 3% of squid paste, 23% of fairy shrimp, 2% of phospholipid, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 10:

Ingredients: The zero-starch and binder-free starter compound feed for fish comprised by mass, 26% of fishmeal, 3% of casein, 3% of beer yeast powder, 20 of dried earthworm, 2% of betaine, 3% of squid paste, 2% of phospholipid, 23% of oyster, 1.5% of fish oil, 1.5% of vitamin mixture, 5% of exogenous multienzyme complex, 2% of mineral element mixture, 2% of biological preparation, 3% of EPA, and 3% of DHA.

Preparation was conducted according to comparative example 2.

Comparative example 11 (the step of vacuum freeze drying was absent in this comparative example):

Ingredients: The zero-starch and binder-free starter compound feed for fish comprised by mass, 26% of fishmeal, 14% of copepod, 3% of casein, 6% of brine shrimp, 3% of beer yeast powder, 5% of dried earthworm, 2% of betaine, 3% of squid paste, 6% of fairy shrimp, 6% of squid, 2% of phospholipid, 6% of oyster, 1.5% of fish oil, 1.5% of vitamin mixture, 5% of exogenous multienzyme complex, 2% of mineral element mixture, 2% of biological preparation, 3% of EPA, and 3% of DHA.

Preparation: All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 25 minutes to give a mash, which was then subjected to roller drying, homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for fish.

Experiments for effect measurement:

1. Experiment on feeding rate

Freshwater fish larvae were respectively fed with the starter compound feeds of example 1 and comparative examples 1 to 11, wherein a group provided with rotifer, which is a natural feed, was taken as control. The experiment was conducted as follows. Fully aerated tap water was added to a 1000 ml beaker. Before the experiment, water was aerated after temperature and salinity were adjusted to predetermined levels in each group. In each group, salinity was adjusted with sea salt starting from a concentration of 6 ppt and increasing or reducing by 4 ppt every 2 hours until it reached the predetermined level. In order to ensure the temperature accurate and controllable, the experiment was conducted in illumination incubators (MGC type) after salinity was adjusted to the predetermined level. Temperature was increased or reduced by 2.0°C every 2 hours starting from 25°C. The fish larvae were placed in various 1000 ml beakers respectively, 100 fish in each beaker and 1,000 fish in each group. Photoperiod was set to be 24L:0D. The water was measured to have a pH value of 7.5-8.0 and dissolved oxygen content of 6.0 mg/L. The starter compound feeds for fish were provided from the 4th day (generally, larvae began to feed at the 4th day after they have hatched), 8 times a day. 1 hour after feeding, the feeding rate was measured for each group by collecting 30 fish from each beaker, and conducting microscopic examination to inspect their feeding status for calculating the feeding rate. The feeding rate data of the 5th day was taken as the final results (since all the larvae had fed at the 6th day), which were averaged for analysis.

$$\text{Feeding rate (\%) = shrimp that have fed / total shrimp} \times 100$$

Results were as shown in Table 1.

Table 1: Evaluation on the feeding-rate promotion of the starter compound feeds

| Group | Feeding rate |
|---|---|
| Example 1 | 99.3% |
| Comparative example 1 | 89.2% |
| Comparative example 2 | 67.5% |
| Comparative example 3 | 62.1% |
| Comparative example 4 | 79.3% |
| Comparative example 5 | 77.6% |
| Comparative example 6 | 68.9% |
| Comparative example 7 | 80.5% |
| Comparative example 8 | 85.4% |
| Comparative example 9 | 76.1% |
| Comparative example 10 | 81.2% |
| Comparative example 11 | 85.6% |
| Control (rotifer) | 82.1% |

As can be seen from Table 1, the starter compound feed for fish provided in example 1 gave a feeding rate significantly higher than those in the comparative examples and control group.

2. Growth experiment

a: A breeding experiment was conduct by providing the starter compound feeds for fish as provided in the example 1 and comparative examples 1-11 to newly hatched black carps, wherein a group provided with rotifer, which is a conventional natural feed, was taken as control.

b: Grouping

Fish newly hatching in one time were collected for the experiment, three replicate in each group, and about 2,000 fish in each replicate, results of which would be averaged for analysis.
Feeding management is carried out according to that of a regular farm. The feeds were provided regularly every 2-4 hours.

c: Results

The feeding status was inspected to record the time when fish began to feed. In order to reduce the error as much as possible, date of the three replicates were respectively recorded by three persons, and the results were averaged.

For each group, the initial total weight and the total weight at day 30 were measured to calculate the weight gain within 30 days.

$$\text{Weight gain (\%)} = 100 \times (\text{final weight - initial weight}) / \text{initial weight}$$

Survival rates at day 45 were calculated. Also, feed efficiency and specific growth rate were calculated.

$$\text{Feed efficiency (\%)} = 100 \times (\text{final weight - initial weight}) / \text{weight of feed}$$

$$\text{Specific growth rate (\%)} = 100 \times (\ln (\text{final weight}) - \ln (\text{initial weight})) / t \text{ (t represents the number of days the breeding had been conducted)}$$

d: Results were as shown in Table 2.

Table 2: Evaluation on the growth promotion of the starter compound feeds

| Group | Fish began to feed | Weight gain Day 30 | Survival rate Day 45 | Feed efficiency |
|---|---|---|---|---|
| Example 1 | 36 hours later | 4122% | 99% | 97% |
| Comparative example 1 | 48 hours later | 3931% | 88% | 89% |
| Comparative example 2 | 60 hours later | 3287% | 93% | 93% |
| Comparative example 3 | 72 hours later | 3578% | 90% | 90% |
| Comparative example 4 | 84 hours later | 3012% | 91% | 88% |
| Comparative example 5 | 96 hours later | 2080% | 82% | 79% |
| Comparative example 6 | 108 hours later | 3175% | 89% | 90% |
| Comparative example 7 | 120 hours later | 3680% | 91% | 91% |
| Comparative example 8 | 132 hours later | 3011% | 91% | 93% |
| Comparative example 9 | 144 hours later | 3477% | 89% | 90% |
| Comparative example 10 | 156 hours later | 3109% | 91% | 88% |
| Comparative example 11 | 168 hours later | 2959% | 89% | 85% |
| Control (rotifer) | 200 hours later | 1968% | 78% | 80% |

As can be concluded from Table 2, the starter compound feeds of the present invention exhibited significant synergy, as the components with their proportions constituted a harmonious organic whole that could increase the feeding rate and significantly increase the attractivity of the feed, and was beneficial to the growth and development of fish. Also, the feed exhibited high feed efficiency and could significantly increase the survival rate and growth rate.

3. Experiment on suspensibility and stability

There are generally three states of feed in water: floating on surface, suspended in water, and sinking to bottom. Aquatic animals have different requirements on feed suspensibility due to different living habits. Fish larvae mainly live in the upper water, so their feeding area is mainly in the upper water. Due to poor swimming activity and poor feeding ability, newly hatched fish larvae are in a continuous feeding state, and thus have higher requirements on sinking speed and stability (ratio of retained dry matter) of the feed in water.

The starter compound feeds of example 1 and comparative examples 1-11 were tested for their suspensibility and stability in water.

a: Test method

(1) Measurement of suspensibility: Suspensibility of a feed is usually determined by measuring suspension ratio: adding 100 mL of distilled water to a 100 mL beaker, weighing out m1 (g) of the feed and evenly sprinkling on the distilled water and letting stand for a while; correcting the suspended solids along the surface using a suction pipette, filtering, and drying at 80°C in an oven to constant weight to give m2 (g) of solids.

$$\text{Suspension ratio (\%)} = m2 / m1 \times 100\%$$

(2) Measurement of stability in water was conducted according to a method of the American Feed Industry Association: weighing out m g of feed, evenly spreading out on a 200-mesh sieve, slowing placing into a glass container containing 40 L of 27°C deionized water; after immersing for one hour, taking out the sieve, drying, and weighing to calculate the ratio of retained dry matter in the feed at different immersing times, three replicates for each group. The stability in water was the ratio of the final dry-matter weight to the initial dry-matter weight, as shown in Table 3 (rounded off to the first decimal place). The starter compound feed of example 1 was further tested for the ratio of retained dry matter in the feed at different immersing times by immersing for 10 minutes, 30 minutes, 1 hour, 2hours, 4 hours, 6 hours and 12 hours, three replicates for each group; the stability in water was the ratio of the final dry-matter weight to the initial dry-matter weight, as shown in Table 4 (rounded off to the first decimal place).

Table 3: Evaluation on the suspensibility and stability of the starter compound feeds

| Group | Time | Suspensibility | Stability in water |
|---|---|---|---|
| Example 1 | 1 h | 98.89% | 99.01% |
| Comparative example 1 | 1 h | 82.13% | 85.56% |
| Comparative example 2 | 1 h | 87.33% | 84.58% |
| Comparative example 3 | 1 h | 80.34% | 79.11% |
| Comparative example 4 | 1 h | 82.36% | 83.80% |
| Comparative example 5 | 1 h | 80.27% | 83.79% |
| Comparative example 6 | 1 h | 78.22% | 80.46% |
| Comparative example 7 | 1 h | 89.88% | 87.77% |
| Comparative example 8 | 1 h | 86.61% | 87.73% |
| Comparative example 9 | 1 h | 72.25% | 72.35% |
| Comparative example 10 | 1 h | 70.46% | 71.14% |
| Comparative example 11 | 1 h | 88.21% | 87.50% |

Table 4: Evaluation on the suspensibility and stability of the starter compound feed of example 1

| Time | 10 min | 30 min | 1 h | 2 h | 4 h | 6 h | 12 h |
|---|---|---|---|---|---|---|---|
| Suspensibility | 98.89% | 90.23% | 85.72% | 85.97% | 80.12% | 77.78 | 65.59% |
| Stability | 99.01% | 90.14% | 87.79% | 85.01% | 80.06% | 75.42% | 66.18% |

As shown in Table 4, the starter compound feed of the present invention exhibited excellent suspensibility and stability in water, and was basically suspended at the upper region of water, while the other starter compound feeds were basically suspended at the middle region of water.

Example 2:

Ingredients: The zero-starch and binder-free starter compound feed for fish comprised by mass, 15% of fishmeal, 20% of copepod, 5% of casein, 3% of brine shrimp, 2% of beer yeast powder, 5% of dried earthworm, 4% of betaine, 2% of squid paste, 10% of fairy shrimp, 10% of squid, 1% of phospholipid, 3% of oyster, 1% of fish oil, 2% of vitamin mixture, 2% of exogenous multienzyme complex, 3% of mineral element mixture, 1% of biological preparation, 5% of EPA, and 6% of DHA.

Preparation: All the ingredients were pulverized (pulverized via an ultrafine pulverizer or homogenized via a colloid mill; for example, the fishmeal, casein, beer yeast powder, betaine, phospholipid, vitamin mixture, exogenous multienzyme complex, mineral element mixture, biological preparation, EPA, and DHA were pulverized via an ultrafine pulverizer, while the copepod, brine shrimp, dried earthworm, squid paste, fairy shrimp, squid, oyster, and fish oil were homogenized via a colloid mill) to a size of 350 mesh, mixed completely and evenly, added with water according to a mass ratio of 25:75 (ingredients to water) and stirred for 20 minutes to give a mash, which was then subjected to vacuum freeze drying at -80°C (e.g. using liquid nitrogen), homogenized, expanded (with an expansion ratio of 16%; the expansion ratio is calculated by: (expanded pellet volume - unexpanded pellet volume) / unexpanded pellet volume), spray dried (with an inlet temperature of 175°C and an outlet temperature of 85°C), oven dried (at a temperature of 75°C to 125°C), sifted, and cooled to give the starter compound feed for fish.

Example 3:

Ingredients: The zero-starch and binder-free starter compound feed for fish comprised by mass, 20% of fishmeal, 10% of copepod, 1% of casein, 10% of brine shrimp, 5% of beer yeast powder, 8% of dried earthworm, 1% of betaine, 3% of squid paste, 4% of fairy shrimp, 5% of squid, 3% of phospholipid, 10% of oyster, 2.5% of fish oil, 1.5% of vitamin mixture, 10% of exogenous multienzyme complex, 1% of mineral element mixture, 3% of biological preparation, 1% of EPA, and 1% of DHA.

Preparation: All the ingredients were pulverized (pulverized via an ultrafine pulverizer or homogenized via a colloid mill; for example, the fishmeal, casein, beer yeast powder, betaine, phospholipid, vitamin mixture, exogenous multienzyme complex, mineral element mixture, biological preparation, EPA, and DHA were pulverized via an ultrafine pulverizer, while the copepod, brine shrimp, dried earthworm, squid paste, fairy shrimp, squid, oyster, and fish oil were homogenized via a colloid mill) to a size of 550 mesh, mixed completely and evenly, added with water according to a mass ratio of 35:65 (ingredients to water) and stirred for 45 minutes to give a mash, which was then subjected to vacuum freeze drying at -80°C (e.g. using liquid nitrogen), homogenized, expanded (with an expansion ratio of 16%; the expansion ratio is calculated by: (expanded pellet volume - unexpanded pellet volume) / unexpanded pellet volume), spray dried (with an inlet temperature of 175°C and an outlet temperature of 85°C), oven dried (at a temperature of 75°C to 125°C), sifted, and cooled to give the starter compound feed for fish.

Example 4:

Ingredients: 50% of fishmeal, 10% of copepod, 1% of casein, 3% of brine shrimp, 2% of beer yeast powder, 5% of dried earthworm, 1% of betaine, 5% of squid paste, 4% of fairy shrimp, 5% of squid, 1% of phospholipid, 3% of oyster, 1% of fish oil, 1% of vitamin mixture, 2% of exogenous multienzyme complex, 1% of mineral element mixture, 1% of biological preparation, 2% of EPA, and 2% of DHA.

Preparation was conducted according to example 1.

The above examples are preferred embodiments of the present invention, but the present invention is not limited by the above examples.

**Claims**

1. A zero-starch and binder-free starter compound feed for fish, obtainable by the following method:

   providing ingredients, the ingredients comprising by mass, 15-50% of fishmeal, 10-20% of copepod, 1-5% of casein, 3-10% of brine shrimp, 2-5% of beer yeast powder, 5-8% of dried earthworm, 1-4% of betaine, 2-5% of squid paste, 4-10% of fairy shrimp, 5-10% of squid, 1-3% of phospholipid, 3-10% of oyster, 1-2.5% of fish oil, 1-2% of vitamin mixture, 2-10% of exogenous multienzyme complex, 1-3% of mineral element mixture, 1-3% of biological preparation, 1-5% of EPA, and 1-6% of DHA;
   pulverizing the ingredients, mixing evenly, adding water and stirring to give a mash; vacuum freeze drying the mash at -50°C to -100°C, and then homogenizing, expanding, spray drying, oven drying, sifting, and cooling to give the starter compound feed for fish;
wherein the step of pulverizing the ingredients is performed by pulverizing to a size of 350 to 550 mesh using an ultrafine pulverizer and/or a colloid mill; and the step of adding water and stirring to give the mash is performed by adding water and stirring for 20-45 minutes to give a mash containing by mass 25-35% of the ingredients.

2. The zero-starch and binder-free starter compound feed for fish according to claim 1, **characterized in that**, the ingredients comprises by mass, 40% of fishmeal, 10% of copepod, 3% of casein, 6% of brine shrimp, 3% of beer yeast powder, 4% of dried earthworm, 2% of betaine, 6% of fairy shrimp, 5% of squid, 2% of phospholipid, 4% of oyster, 1.5% of fish oil, 1.5% of vitamin mixture, 3% of exogenous multienzyme complex, 1% of mineral element mixture, 2% of biological preparation, 3% of EPA, and 3% of DHA.

3. The zero-starch and binder-free starter compound feed for fish according to claim 1 or 2, **characterized in that**, the step of vacuum freeze drying at -50°C to -100°C is performed by vacuum drying at -80°C.

4. The zero-starch and binder-free starter compound feed for fish according to claim 1 or 2, **characterized in that**, the step of expanding is performed by a micro-expansion with an expansion ratio of 16%.

5. The zero-starch and binder-free starter compound feed for fish according to claim 1 or 2, **characterized in that**, the step of spray drying is performed with an inlet temperature of 175°C and an outlet temperature of 85°C.

6. The zero-starch and binder-free starter compound feed for fish according to claim 1 or 2, **characterized in that**, the step of oven drying is performed with a drying temperature of 75°C to 125°C.

7. The zero-starch and binder-free starter compound feed for fish according to claim 1 or 2, **characterized in that**, the exogenous multienzyme complex comprises two or more of protease, lipase and phytase; the biological preparation is *Bacillus.*

8. The zero-starch and binder-free starter compound feed for fish according to claim 1 or 2, **characterized in that**, the vitamin mixture comprises per kilogram: 30 g of vitamin A, 2 g of vitamin D3, 60 g of vitamin E, 4.5 g of vitamin K3, 30 g of vitamin B1, 2 g of vitamin B2, 60 g of vitamin B6, 4.5 g of vitamin B12, 20 g of nicotinic acid, 20 g of calcium pantothenate, 0.15 g of biotin, 150 g of inositol, 4 g of folic acid, and 275 g of vitamin C, with the balance being corncob meal;
the mineral element mixture comprises per kilogram: 20 g of copper sulfate, 100 g of ferrous sulfate, 35 g of zinc sulfate, 11 g of manganese sulfate, 0.55 g of cobalt chloride, 0.55 g of sodium selenite, 20 g of potassium dihydrogen phosphate, and 20 g of sodium dihydrogen phosphate, with the balance being zeolite powder.

**Patentansprüche**

1. Stärkeloses und bindemittelfreies Starter-Mischfutter für Fische, erhältlich durch das folgende Verfahren:

Bereitstellen von Zutaten, wobei die Zutaten Folgendes umfassen: 15-50 Gew.-% Fischmehl, 10-20 Gew.-% Copepode, 1-5 Gew.-% Kasein, 3-10 Gew.-% Salinenkrebs, 2-5 Gew.-% Bierhefepulver, 5-8 Gew.-% getrockneter Regenwurm, 1-4 Gew.-% Betain, 2-5 Gew.-% Tintenfischpaste, 4-10 Gew.-% Kiemenfußkrebs, 5-10 Gew.-% Tintenfisch, 1-3 Gew.-% Phospholipid, 3-10 Gew.-% Auster, 1-2,5 Gew.-% Fischöl, 1-2 Gew.-% Vitaminmischung, 2-10 Gew.-% exogener Multienzymkomplex, 1-3 Gew.-% Mineralstoffmischung, 1-3 Gew.-% biologisches Präparat, 1-5 Gew.-% EPA und 1-6 Gew.-% DHA;
Pulverisieren der Zutaten, gleichmäßiges Mischen, Zugeben von Wasser und Rühren, um einen Futterbrei zu ergeben; Vakuumgefriertrocknen des Futterbreis bei -50 °C bis -100 °C und dann Homogenisieren, Expandieren, Sprühtrocknen, Ofentrocknen, Sieben und Kühlen, um das Starter-Mischfutter für Fische zu ergeben;
wobei der Schritt des Pulverisierens der Zutaten durch Pulverisieren auf eine Größe von 350 bis 550 Mesh unter Verwendung eines ultrafeinen Pulverisierers und/oder einer Kolloidmühle durchgeführt wird; und der Schritt des Zugebens von Wasser und des Rührens, um den Futterbrei zu ergeben, durch Zugeben von Wasser und Rühren für 20-45 Minuten durchgeführt wird, um einen Futterbrei zu ergeben, der 25-35 Gew.-% der Zutaten enthält.

2. Stärkeloses und bindemittelfreies Starter-Mischfutter für Fische nach Anspruch 1, **dadurch gekennzeichnet, dass** die Zutaten Folgendes umfassen: 40 Gew.-% Fischmehl, 10 Gew.-% Copepode, 3 Gew.-% Kasein, 6 Gew.-%

Salinenkrebs, 3 Gew.-% Bierhefepulver, 4 Gew.-% getrockneter Regenwurm, 2 Gew.-% Betain, 6 Gew.-% Kiemenfußkrebs, 5 Gew.-% Tintenfisch, 2 Gew.-% Phospholipid, 4 Gew.-% Auster, 1,5 Gew.-% Fischöl, 1,5 Gew.-% Vitaminmischung, 3 Gew.-% exogener Multienzymkomplex, 1 Gew.-% Mineralstoffmischung, 2 Gew.-% biologisches Präparat, 3 Gew.-% EPA und 3 Gew.-% DHA.

3. Stärkeloses und bindemittelfreies Starter-Mischfutter für Fische nach Anspruch 1 oder 2, **dadurch gekennzeichnet, dass** der Schritt des Vakuumgefriertrocknens bei -50 °C bis -100 °C durch Vakuumtrocknen bei -80 °C durchgeführt wird.

4. Stärkeloses und bindemittelfreies Starter-Mischfutter für Fische nach Anspruch 1 oder 2, **dadurch gekennzeichnet, dass** der Schritt des Expandierens durch eine Mikroexpansion mit einem Expansionsverhältnis von 16 % durchgeführt wird.

5. Stärkeloses und bindemittelfreies Starter-Mischfutter für Fische nach Anspruch 1 oder 2, **dadurch gekennzeichnet, dass** der Schritt des Sprühtrocknens bei einer Eintrittstemperatur von 175 °C und einer Austrittstemperatur von 85 °C durchgeführt wird.

6. Stärkeloses und bindemittelfreies Starter-Mischfutter für Fische nach Anspruch 1 oder 2, **dadurch gekennzeichnet, dass** der Schritt des Ofentrocknens bei einer Trocknungstemperatur von 75 °C bis 125 °C durchgeführt wird.

7. Stärkeloses und bindemittelfreies Starter-Mischfutter für Fische nach Anspruch 1 oder 2, **dadurch gekennzeichnet, dass** der exogene Multienzymkomplex zwei oder mehr von Protease, Lipase und Phytase umfasst; das biologische Präparat *Bacillus* ist.

8. Stärkeloses und bindemittelfreies Starter-Mischfutter für Fische nach Anspruch 1 oder 2, **dadurch gekennzeichnet, dass** die Vitaminmischung pro Kilogramm Folgendes umfasst: 30 g Vitamin A, 2 g Vitamin D3, 60 g Vitamin E, 4,5 g Vitamin K3, 30 g Vitamin B1, 2 g Vitamin B2, 60 g Vitamin B6, 4,5 g Vitamin B12, 20 g Nikotinsäure, 20 g Kalziumpantothenat, 0,15 g Biotin, 150 g Inositol, 4 g Folsäure und 275 g Vitamin C, wobei der Rest Maiskolbenmehl ist;

die Mineralstoffmischung pro Kilogramm Folgendes umfasst: 20 g Kupfersulfat, 100 g Eisensulfat, 35 g Zinksulfat, 11 g Mangansulfat, 0,55 g Kobaltdichlorid, 0,55 g Natriumselenit, 20 g Kaliumdihydrogenphosphat und 20 g Natriumdihydrogenphosphat, wobei der Rest Zeolithpulver ist.

**Revendications**

1. Aliment composé de départ pour poisson exempt de liant et d'amidon, pouvant être obtenu par la méthode suivante :

fournir des ingrédients, les ingrédients comprenant en masse, 15 à 50 % de farine de poisson, 10 à 20 % de copépode, 1 à 5 % de caséine, 3 à 10 % de crevettes des salines, 2 à 5 % de levure de bière en poudre, 5 à 8 % de vers de terre séchés, 1 à 4 % de bétaïne, 2 à 5 % de pâte de calamars, 4 à 10 % d'anostracés, 5 à 10 % de calamars, 1 à 3 % de phospholipides, 3 à 10 % d'huîtres, 1 à 2,5 % d'huile de poisson, 1 à 2 % de mélange de vitamines, 2 à 10 % de complexe multienzyme exogène, 1 à 3 % de mélange d'éléments minéraux, 1 à 3 % de préparation biologique, 1 à 5 % d'EPA et 1 à 6 % de DHA ;
pulvériser les ingrédients, mélanger uniformément, ajouter de l'eau et agiter pour obtenir une purée ; lyophiliser sous vide la purée à une température de -50 °C à - 100 °C, puis homogénéiser, dilater, sécher par atomisation, sécher au four, tamiser et refroidir pour donner l'aliment composé de départ pour poisson ;
l'étape de pulvérisation des ingrédients étant effectuée en pulvérisant à une taille de 350 à 550 mesh au moyen d'un pulvérisateur ultrafin et/ou d'une broyeuse colloïdale ; et l'étape d'ajout d'eau et d'agitation pour obtenir la purée étant effectuée en ajoutant de l'eau et en agitant pendant 20 à 45 minutes pour obtenir une purée contenant en masse 25 à 35 % des ingrédients.

2. Aliment composé de départ pour poisson exempt de liant et d'amidon selon la revendication 1, **caractérisé en ce que** les ingrédients comprennent en masse, 40 % de farine de poisson, 10 % de copépode, 3 % de caséine, 6 % de crevettes des salines, 3 % de levure de bière en poudre, 4 % de vers de terre séchés, 2 % de bétaïne, 6 % d'anostracés, 5 % de calamars, 2 % de phospholipides, 4 % d'huître, 1,5 % d'huile de poisson, 1,5 % de mélange de vitamines, 3 % de complexe multienzyme exogène, 1 % de mélange d'éléments minéraux, 2 % de préparation biologique, 3 % d'EPA et 3 % de DHA.

**3.** Aliment composé de départ pour poisson exempt de liant et d'amidon selon la revendication 1 ou 2, **caractérisé en ce que** l'étape de lyophilisation sous vide à une température comprise entre -50 °C et -100 °C est effectuée par séchage sous vide à - 80 °C.

**4.** Aliment composé de départ pour poisson exempt de liant et d'amidon selon la revendication 1 ou 2, **caractérisé en ce que** l'étape de dilatation est effectuée par une micro-dilatation avec un taux de dilatation de 16 %.

**5.** Aliment composé de départ pour poisson exempt de liant et d'amidon selon la revendication 1 ou 2, **caractérisé en ce que** l'étape de séchage par atomisation est effectuée avec une température d'entrée de 175 °C et une température de sortie de 85 °C.

**6.** Aliment composé de départ pour poisson exempt de liant et d'amidon selon la revendication 1 ou 2, **caractérisé en ce que** l'étape de séchage au four est effectuée avec une température de séchage de 75 °C à 125 °C.

**7.** Aliment composé de départ pour poisson exempt de liant et d'amidon selon la revendication 1 ou 2, **caractérisé en ce que** le complexe multienzyme exogène comprend au moins deux éléments parmi la protéase, la lipase et la phytase ; la préparation biologique est du bacille.

**8.** Aliment composé de départ pour poisson exempt de liant et d'amidon selon la revendication 1 ou 2, **caractérisé en ce que** le mélange de vitamines comprend par kilogramme : 30 g de vitamine A, 2 g de vitamine D3, 60 g de vitamine E, 4,5 g de vitamine K3, 30 g de vitamine B1, 2 g de vitamine B2, 60 g de vitamine B6, 4,5 g de vitamine B12, 20 g d'acide nicotinique, 20 g de pantothénate de calcium, 0,15 g de biotine, 150 g d'inositol, 4 g d'acide folique et 275 g de vitamine C, le reste étant de la semoule de maïs ;
le mélange d'éléments minéraux comprend par kilogramme : 20 g de sulfate de cuivre, 100 g de sulfate ferreux, 35 g de sulfate de zinc, 11 g de sulfate de manganèse, 0,55 g de chlorure de cobalt, 0,55 g de sélénite de sodium, 20 g de dihydrogénophosphate de potassium, et 20 g de dihydrogénophosphate de sodium, le reste étant une poudre de zéolite.

**EP 3 685 676 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108125069 A
- CN 107373092 A
- CN 107518210 A
- CN 106376778 A